# EUROPEAN PATENT SPECIFICATION

(11) **EP 3 794 177 B1**
(45) Date of publication and mention of the grant of the patent: **20.08.2025**
(21) Application number: 19803486.0
(22) Date of filing: 15.05.2019
(51) Int. Cl.: D21C 9/00, D21C 5/00, D21H 11/20, D21C 3/02, C08B 1/00

(54) **A METHOD FOR PRE/TREATMENT OF PAPER PULP**
VERFAHREN ZUR VORBEHANDLUNG VON PAPIERZELLSTOFF
PROCÉDÉ DE PRÉTRAITEMENT DE PÂTE À PAPIER

(30) Priority: 15.05.2018 FI 20185448
(43) Date of publication of application: 24.03.2021
(73) Proprietor: Metsä Spring Oy, 02150 Espoo (FI)
(72) Inventor: SUURNÄKKI, Anna, 02020 METSÄ (FI); KOVASIN, Kari, 02020 METSÄ (FI)
(74) Representative: Laine IP Oy
(86) International application number: PCT/FI2019/050381
(87) International publication number: WO 2019/220014

(56) References cited:
- WO-A1-2011/044646
- WO-A1-2014/041251
- US-A1- 2015 184 338
- MA, Y. ET AL.: "Upcycling of waste paper and cardboard to textiles", GREEN CHEMISTRY, vol. 18, no. 3, 15 September 2015 (2015-09-15) - 2016, pages 858 - 866, XP055653365
- STEPAN, A. ET AL.: "IONCELL-P&F: Pulp Fractionation and Fiber Spinning with Ionic Liquids", INDUSTRIAL & ENGINEERING CHEMISTRY RESEARCH, vol. 55, no. 29, 7 July 2016 (2016-07-07), pages 8225 - 8233, XP055653368

## Description

### Field of the Invention

The present invention relates to the use of paper pulp for production of solutions containing cellulose. In particular, the invention concerns a method for pre-treatment of paper pulp prior to dissolution thereof with ionic liquids or corresponding organic solvents and the subsequent processing into cellulose-based structures, such as fibers, filaments or film.

### Background of the Invention

Cellulose pulp manufactured from wood (wood pulp) is suitable for direct dissolution with ionic liquids, i.e. ionic solvents (IL), and for the production of staple fibers.

Swatloski et al. (US 6 824 599 (B2), EP 2 325 246 (B1) ja EP 1 458 805 (B1)) have first described a process of dissolving pure dry cellulose in anhydrous ionic liquid and regenerating fiber from the obtained solution into counter-solvent, such as water, using a syringe. The described process uses ionic liquid comprising at most 5 weight-% of nitrogen-containing alkaline component. The dissolution process can be enhanced by microwave heating. Swatloski et al. also notes that the cellulose used as a raw material can be a wood pulp.

The use of a moisture-containing sulphate pulp (also referred to in this document as "paper pulp") for dissolution of cellulose and hemicellulose in ionic liquid is described first in the 2004 TITK patent publication EP 1 763 596. Cellulose, or paper pulp, is fed into the dissolving process according to this description, pressed to a moisture content of about 50 %, at which it is subsequently dissolved in the ionic liquid. The patent publication also gives the first disclosure of the air gap spinning process for producing cellulose fibers from ionic liquids.

Dissolving of paper pulp into an ionic solution is described later (2007) also in patent publication CA 1 627 879.

Ma et. al. (2016) describes enzyme treatment of air-dried, recycled pulp, followed by its treatment with acid.

Never-dried paper pulp is advantageous because its drying is an expensive operation and, on the other hand, drying causes hornification of fibers. Hornified fiber is less reactive for various chemical further processing and cellulose dissolving.

However, paper pulp has some characteristics that make it difficult to use as such for direct IL-dissolution. Thus, the average degree of polymerization (DP), i.e. "viscosity" in the language of the pulp world, of cellulose fiber is too high. The viscosity of softwood paper pulp is in the range of 850 to 900 ml/g, whereas the viscosity required for IL-dissolution is typically 400 to 600 ml/g.

Furthermore, the molecular weight distribution of paper pulp is not suitable but needs to be modified so that the viscoelastic and other rheological properties of the IL-dissolution spinning solution and coagulating filament are suitable for the spinning process. In other words, paper pulp as such does not provide stable spinning.

Typically, paper pulp also has too high concentration of (mainly divalent) metal ions (e.g. alkaline earth metals, such as Ca and Mg, and transition metals, such as Fe, Mn, Co and Ni). Concentration of these metal ions should be reduced prior to IL-dissolution.

Adjustment of viscosity and metal content of paper pulp by acid treatment is known technology which is discussed in US patent publication 2002/0064654A1.

Adjustment of paper pulp viscosity by acid treatment is based on the ability of a strong acid to hydrolytically break cellulose fibers at elevated temperature. At a sufficiently low pH, i.e. pH < 3, the metal cations bound to the pulp are also released. Typically, the pH required for adjustment of viscosity by acid treatment is pH 1 to 1.5 or even lower. This means that after the treatment the removal of acidity by washing the pulp suspension requires a very efficient washing process and plenty of water. The raising of pH can also be done with an alkaline chemical, e.g. lye. However, this increases the Na-content of the pulp and means additional costs. On the other hand, the ability of the acid treatment to adjust the molecular weight distribution as desired is limited.

It is also known that cellulose hydrolyzing enzymes can be used to adjust the viscosity of both paper pulp and dissolving pulp. The viscosity of paper pulp has been found to decrease differently with different enzyme activities, endoglucanase treatments decreasing viscosity significantly more than cellobiohydrolase treatments (Pere et al., 1995). The use of enzymes in the bleaching sequence of both dissolving pulp and paper pulp or as a final stage for adjustment of viscosity prior to NMMO-based Lyocell-process in known (US 2009/0165969 A1). Thus, Weyerhaeuser has described in their published patent application WO1999016960 A1 a method of first treating chemical pulp in an alkali to achieve swelling and then with an enzyme preparation containing endoglucanase so that it becomes particularly suitable for the preparation of Lyocell-fibers. Reference is further made to WO 2009088635A3 which is the same family with US 2009/0165969, in which latter publication Weyerhauser has presented a process for preparing pulp suitable for Lyocell-process by bleaching process which comprises one enzyme treatment stage. Lyocel-pulp produced by bleaching process is mentioned to have acceptable, low DP and acceptable viscosity, although no numerical values have been given.

Paper pulp and dissolving pulp can be pre-treated with enzymatic and mechanical treatments and treatments combining those. The purpose of these treatments is to open the fiber surface and wall in such a way that facilitates dissolution of cellulose in either alkaline aqueous solution or NMMO solvent. Reference is here made to EP application publication 2 116 557 (A1); Grönqvist et al. 2015, and for the NMMO solvent to US application publication US 2009/0165969 A1. It is also known (Michud et al. 2015) that in IL-dissolving of dissolving pulp, the molecular weight distribution of the pulp can be adjusted to be advantageous for rheological properties of the spinning solution by mixing dissolving pulps of different molecular weight at a suitable ratio.

For the above reasons, for example, paper pulp is generally not used as the main raw material for cellulose-based staple fibers. Paper pulp is significantly cheaper than dissolving pulp, whereby replacement of dissolving pulp with a cheaper raw material would be advantageous.

### Summary of the Invention

The present invention aims at solving at least some of the problems of the prior art and providing a new kind of solution for modifying paper pulp suitable for dissolution of cellulose and possibly hemicellulose and processing thereof into cellulose and hemicellulose based structures, such as fibers, filaments and film.

It has now surprisingly been found that by combining an endoglucanase treatment of pulp with an acid wash, a pulp is obtained which in IL dissolution is capable of dissolving into, for example ionic liquids, and thereby a solution is attained which has rheological properties which make it suitable for staple fiber spinning.

The invention provides a method for producing paper pulp suitable for dissolving cellulose from, for example, a metal ion containing chemical pulp suitable for paper production.

The invention also provides a method for producing fiber spinning solution from cellulose and hemicellulose of pulp. According to the method a chemical pulp suitable for paper production is used as a raw material, which pulp comprises at least some metal ions originating from the raw material of the pulp, and the pulp is dissolved in a liquid in which cellulose and hemicellulose are soluble and from which the dissolved cellulose and hemicellulose can be precipitated for producing cellulose-based structures, such as fibers, filaments and film and other cellulose-based particles.

In the invention, never-dried pulp is first contacted in a water suspension with an enzyme preparation which contains endoglucanase as its main activity, in order to modify the pulp. The pH value of such obtained pulp is made slightly acidic for separating metal ions from the pulp. After this the pH of the modified pulp is raised above 4, especially above 5, and the consistency of the pulp is raised to a suitable value for dissolution, to 30 to 50 weight-%.

More specifically, the invention is characterized by what is stated in in the characterizing parts of the independent claims.

Considerable advantages are obtained with the present invention. By a treatment using an endoglucanase enzyme at elevated fiber consistency (typically at a dry matter content higher than 15 weight-%) it is possible to reduce the viscosity of the never-dried paper pulp in a controlled manner while simultaneously attaining a cellulose molar weight distribution suitable for IL-dissolution and staple fiber spinning. After this, removal of harmful metal cations can be performed at a pH (typically 2.5 to 3) higher than that of the above described acid treatment, which is sufficient for removing metal ions. Doing away with such acidity by washing of the treated fiber suspension is much easier it would be if the pH level required by the viscosity adjustment would be low (such as pH 1 to 1.5 or even lower).

By the present solution, the metal content of the paper pulp can be decreased below the value of 100 ppm, especially under the value of 50 ppm.

The method according to a new technique can be integrated into a pulp process producing paper pulp with preferred process solutions. In addition, the pre-treatment does not produce filtrate or waste water streams which are difficult to process because the resulting dilute aqueous solutions can be used in paper pulp production as a process washing water, for example in bleaching.

By the enzyme-acid wash treatment according to the invention, followed by removal of water to fiber consistency of 30 to 50 %, such feed pulp is obtained that is suitable for dissolving process of IL.

Extensional rheological properties of the fiber filament required by the air gap spinning are created by the very action according to the present method, whereby a controlled adjustment of cellulose molar weight distribution is achieved.

It has surprisingly been found that by the presented solution pulp, having a molar weight distribution at the same level or possibly even higher than with dissolving pulp, can be dissolved without problems. It has also been noted that the viscosity of the spinning solution produced from the pulp treated by the present solution by ionic solvent is lower than solution obtained from such acid treated pulp viscosity of which is at the same level with the present pulp. This enables an increase of the spinning solution polymer content and thus makes the process more effective.

By the method of the invention both cellulose and hemicellulose and even lignin contained in the pulp can be dissolved from the pulp. Thus, the invention provides a method for producing pulp suitable for dissolving cellulose and possibly hemicellulose from metal ions containing, never-dried and high viscosity paper pulp.

In the following, the invention will be described in more detail by the detailed description with reference to the attached drawings.

The drawing shows a simplified process scheme of a pre-treatment process according to one embodiment of the present invention.

### Embodiments of the Invention

In the present solution the term "pulp" means chemical pulp, i.e. pulp prepared from cellulosic raw material by a chemical cooking method, such as sulphate, polysulfide or organosolv cooking, typically an industrially prepared pulp containing cellulose and at least some hemicellulose. In this context, the term "hemicellulose" is used as a common term for all hemicelluloses contained in pulp. The amount of the hemicellulose is generally less than 20 weight-%, more preferably less than about 7.5 weight-%, for example up to 2 weight-% of the dry weight of the pulp.

In addition to the above mentioned components, the pulp may also contain lignin, typically minor amounts of lignin (below 4 %, especially below 2 %, most preferably below 0.5 % of the dry weight of the pulp). As an example of lignin-containing pulp a mention can be made of semi-bleached pulp and so called brown pulp. The pulp can be for example an oxygen-delignified pulp.

Particularly preferably bleached, especially fully bleached chemical pulp is used in the present invention.

In the present context the term "mass" means same as "pulp" unless stated otherwise.

As a raw material, use is especially made of woody plants, i.e. wood, such as softwood, deciduous tree or mixtures of those. In a first embodiment, the raw material is softwood, such as pine or spruce or larch.

**In** another embodiment, the raw material is deciduous tree, such as birch, aspen, poplar, alder, maple, eucalyptus or mixed tropical hardwood.

Annular or perennial plants can also be used for pulp production.

**In** the present solution "never-dried pulp" means pulp which has not been dried to a dry-matter content higher than 50 weight-% after the chemical cooking.

"Paper pulp" or "chemical paper pulp" means pulp which is suitable to be used among others in manufacture of paper on a paper machine.

The viscosity (intrinsic viscosity, measurable for example according to standard T 230 om-08) of the pulp used in the present context is typically about 700-900 g/l.

**In** the present context the pulp is contacted with such an enzyme preparation which is capable to reduce the viscosity of the pulp for at least 5 %, especially at least 15 %, most suitably at least 30 %, in the treatment. Especially the viscosity of the pulp is reduced by up to 75 % by enzyme treatment, most suitably not more than up to 70 %. Especially preferably the viscosity if reduced by 30-60 %.

"Enzyme preparation" means a composition comprising at least one enzyme.

The enzyme preparation may be growth solution or cellular extract comprising one or more enzymes. It may also be isolated enzyme or a mixture or two or more enzymes. In addition to enzyme activity, enzyme preparation typically comprises additives. As an example of these additives a mention can be made of buffers and stabilizers.

Especially preferably enzyme preparation comprises endoglucanase as a main activity.

"Endoglucanase activity" means mainly cellulose hydrolysing enzyme activity which breaks the bonds in the cellulose in the middle of cellulose chain.

The treatment performed by the above presented enzyme preparation is also called as "enzyme treatment" in this context.

"Ionic liquid" and "ionic solution" and "ionic liquid solvent" are used as synonyms to each other. These substances are typical salts and liquid at below 100 °C and most, but not all, are liquid at room temperature.

As mentioned above, the present technology is suitable for pre-treatment of pulp for dissolution of pulp into a suitable form. Typically pulp comprises metal ions sourced from cellulosic raw material, as mentioned above. In addition, pulp is not particularly well suited for dissolution with its viscosity and molar mass distribution to provide spinning solutions for the production of fibers or films. Especially continuous drawing of fibers requires that the spinning solution is nearly free from metal ions and that the cellulose dissolved into the solution has an appropriate average polymerization degree and molar mass distribution.

In one embodiment, the starting material used is paper pulp which has not been dried and which is maintained in aqueous suspension during the whole treatment. With this solution, hornification of the fibers can be avoided.

In one embodiment, the starting material used is paper pulp which has not been subjected to and which will not be subjected to cold alkali extraction.

In one embodiment the pulp is brought into contact with the enzyme preparation in a water suspension in order to modify the pulp. Especially the enzyme preparation includes endoglucanase most suitably as a main activity. pH of the modified pulp obtained by the enzyme treatment is brought to a value of up to 3, preferably below 3, in order to separate the metal ions from the pulp, after which pH of the pulp is raised by a water wash to a value above 4, especially value above 5. Finally, the consistency of the mass is raised to 30 to 50 weight-%.

The pulp is brought into contact with the enzyme preparation in consistency of at least 10 %. It is preferable to operate at a consistency of 15 to 30 % because the sufficient high solids content enhances the enzyme treatment.

The enzyme treatment is performed especially at a pH value higher than 5. The duration of the treatment is 0.1 to 10 h and temperature is at 10 to 75 °C, especially about 20 to 50 °C.

The endoglucanase activity of the enzyme preparation may be based on monocomponent enzymes.

Dosage of the enzyme preparation is typically about 0.001-100 mg protein/ g of pulp to be treated (dry weight). Especially the enzyme preparation is administered such that the endoglucanase activity is administrated in an amount of 0.01-10 mg protein/ g of pulp to be treated (dry weight).

The average polymerization degree (DP) may be reduced by the enzyme treatment. It may also be used to modify the molar mass distribution of the pulp to be better suited for dissolving.

The consistency (i.e. solids content) of the modified pulp obtained from the enzyme treatment is brought to a value of 1-20 weight-%, especially about 5-15 weight-%.

The pH value of the modified pulp obtained from the enzyme treatment is brought to a value of 2-3 for example by adding acid, such as mineral acid, into to the stock of the pulp, especially in a form of an aqueous solution. Especially preferably sulphuric acid or an aqueous solution thereof is being used. It is also possible to use nitric acid. In principle, also other mineral acids may be employed as long as potential corrosion problems are taken into account in the process equipment. Other suitable acids are organic acids, such as aliphatic or aromatic carboxyl acids, such as formic acid.

In one embodiment the metal, especially earth alkali metal and transition metal, content of the modified pulp obtained from the enzyme treatment is brought with acid treatment to a value which is below 1 weight-%, especially below 0.1 weight-%, most suitably below 0.01 weight-%, particularly below 0.001 weight-%, typically below 0.0001 weight-%, for example below 0.00005 weight-% of the dry matter.

In one embodiment the viscosity of the pulp is reduces about 30-60 % by the enzyme treatment, especially endoglucanase treatment. The enzyme treatment followed by the acid treatment may further reduce the viscosity typically by up to 10 %.

The viscosity of the pulp is typically 400-600 ml/g after the treatment presented above.

After the acid treatment, the pulp is washed most suitably with water or aqueous solution. The wash may be performed in conventional process equipment, such as with washing filter.

During or after the washing, the consistency of the pulp is raised suitable for dissolving. The consistency, i.e. solids content, of the pulp is raised to a value of 30 to 50 weight-%. Most suitably it is maintained below 50 weight-%, for example at a value of 30-45 weight-%. In the context of the invention, it has been found advantageous to maintain the consistency in the above mentioned solids content in order to prevent pulp hornification.

In one embodiment the consistency is raised to at least 35 weight-%, most suitably to about 35-40 weight-% by water removal.

In one embodiment, the water removal is performed by mechanical water removal.

According to an especially preferred embodiment the temperature of the pulp is maintained below 50 °C, most suitably at about 10-45 °C, during the removal of water.

The resulting pulp is suitable for preparing a solution suitable for spinning fibers. In the dissolution process, the pulp can be directly dissolved in anhydrous or aqueous organic solvent.

In one particularly preferred embodiment the modified pulp is dissolved in ionic liquid.

As an example of ionic liquids used in the present context a mention can be made among others of imidazole based ionic liquids, such as for example:
1-ethyl-3-methyl-imidazolium chloride ([Emim] [Cl]),
1-ethyl-3-methyl-imidazolium acetate ([Emim] [Ac]),
1-Ethyl-3-methyl-imidazolium-dimethyl phosphate ([Emim] [Me2PO4])
1-ethyl-3-methyl-imidazolium-diethyl phosphate ([EMIM] [DEtPO4]);
1-ethyl-3-methylimidazolium-methylphosphonate [Emim] [(MeO) (H) PO2],
1-Butyl-3-methyl-imidazolium chloride ([Bmim] [Cl]),
1-Butyl-3-methyl-imidazolium acetate ([Bmim] [Ac]),
1-butyl-3-methyl-imidazolium-dicyanamide ([Bmim] [N (CN) 2]),
1-butyl-3-methyl-imidazolium bis[(trifluoromethyl) sulfonyl]-imide ([Bmim] [TFSI]);
1-allyl-3-methyl-imidazolium chloride ([Amim] [Cl]).

Especially preferred examples of ionic liquids are conjugated acids which consist of organic base, in particular so called super base such as 1,1,3,3-tetramethyl-guanidine (TMG), 1,1,2,3,3-pentamethyl-guanidine (PMG), 2,3,4,6,7,8-hexahydro-1H-pyrimido [ 1,2-a] pyrimidine (TBD), 7-Methyl-1,5,7-triazabicyclo [4.4.0] dec-5-enium (mTBD), 1,5-diazabicyclo [4.3.0] non-5-enium (DBN) or 1,8-diaza-bicyclo [5.4.0] undecene 7-ene (DBU) having inorganic or organic conjugated acids, such as acetic acid (or other carboxylic acids), hydrochloric acid, methyl dihydrogen phosphonate, dimethyl hydrogen phosphate or phosphinic acid.

As examples a mention can be made of:
1,1,3,3-Tetramethylguanidium acetate ([TMGH] [OAc]),
1,1,3,3-Tetramethylguanidium propionate ([TMGH] [EtCO2]),
1,1,2,3,3-Pentamethyl guanidine acetate ([PMG] [OAc]),
1,1,2,3,3-Pentamethyl-guanidine-propionate ([PMG] [EtCO2)]
1,5-diazabicyclo [4.3.0] non-5-enium acetate ([DBNH] [OAc]),
1,5-diazabicyclo [4.3.0] non-5-enium propionate ([DBNH] [EtCO2]),
1,8-Diaza-bicyclo [5.4.0] undec-7-ene-acetate ([DBU] [OAc]),
2,3,4,6,7,8-hexahydro-1 H -pyrimido [1,2- a] pyrimidine acetate ([TBDH] [OAc]),
7-Methyl-1,5,7-triazabicyclo [4.4.0] dec-5-enium acetate ([mTBD] [OAc])
2,3,4,6,7,8-Hexahydro-1H-pyrimido [1,2-a] pyrimidine-propionate ([TBDH] [EtCO2)] and
trioctylmethylphosphonium acetate ([P8881] [OAc]) and mixtures thereof.

It should be noted that the above lists are merely given as examples and are not perfect.

However, by the present solution the produced pulp is also suitable for other organic solvents, such as combinations of NMMO and DMA and/or LiCl, of cellulose.

According to one embodiment, by the present technology a method for producing fiber spinning solution from pulp by using raw pulp as a raw material is obtained, which pulp comprises at least some metal ions originating from the pulp raw material.

The pulp modified by the way presented in the method above is dissolved in a liquid in which the pulp is at least partly, most suitably totally, dissolved. By the presented treatment the pulp is most suitably modified such that at least 90 weight-%, most suitably at least 95 weight-%, particularly at least 99.5 weight-% of the pulp dissolves in solubilizer. In this case, the main component of the pulp, the cellulose, and the hemicellulose contained therein, and possibly also the lignin, dissolve in the liquid.

In the present technology, the pulp is considered to be fully dissolved when the mother liquor containing at least 10 weight-% of pulp in a solvent is clear based on the light microscopic examination. Any insoluble portions, for example consisting of inorganic impurities or non-cellulosic components of the raw material, can be mechanically removed, such as by filtration, sieving or centrifugation.

In one embodiment the spinning solution is produced by dissolving the modified pulp straight in the solvent, typically ionic liquid, in order to produce the spinning solution. Dissolving may be performed for example by mixing the above presented water-pulp-composition with the solvent of the pulp to form a mixture and by raising - preferably continuously stirring - the temperature of the mixture in order to remove water and dissolve the pulp.

Typically the pulp is dissolved such that the polymer content in the solution (dry matter) is about 1-25 weight-%, for example 5-20 weight-%.

Cellulose and hemicellulose dissolved in the pulp solution may be precipitated by lowering the temperature or by using a precipitator or a combination of these measures. Polar liquid, such as water or aliphatic or aromatic alcohol, can be used a precipitator of cellulose and hemicellulose.

One preferred embodiment, comprises the following combination: the paper pulp used as a starting material is never-dried and it is subjected to a an enzyme treatment at a sufficiently high consistency (typically at a consistency of 10 to 50 weight-%) in order to enhance the enzyme treatment and at the same time the pulp is during the whole process treated at conditions at which drying of the paper pulp and hornification thereof can be prevented. Such conditions are operation in aqueous slurry, i.e. the material which is treated is kept during the whole process in aqueous slurry to prevent drying and hornification of the fiber.

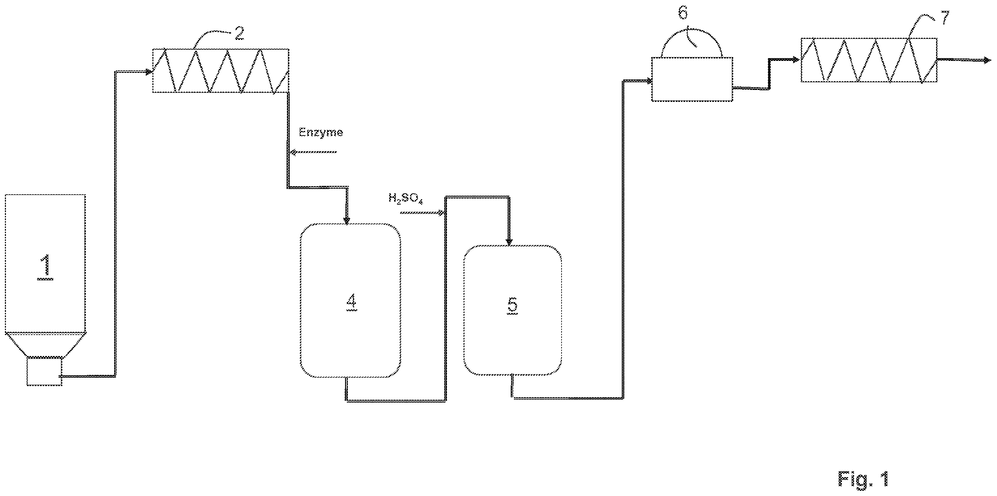

Figure 1 shows a preferred way of performing the pre-treatment integrated into the paper pulp manufacture:
Bleached, never-dried paper pulp is pumped from the bleached pulp storage tower 1 to a thickening pressing device 3 with a pulp pump 2.

To the thickened pulp is added enzyme, and the consistency is set to a level of 10-30 %. After this, the pulp is transferred into a delay tank 4, where it is hold until the predetermined viscosity level and cellulose molar mass distribution is achieved.

Hereafter, the pulp is transferred into the delay tank 5, where the pulp is acid treated at pH 2.5-3 and at consistency of 1-20 %.

After the acid treatment the pulp is diluted with water and washed with washer 6 with water until the pH of the pulp suspension raises to a level > pH 4.

Hereafter, the consistency of the pulp is raised to a dry matter content of 30-50 % by a pressing device 7. Thus obtained pulp is ready to be introduced into the pulp dissolution process.

The following examples illustrate embodiments for pre-treatment of paper pulp prior to the dissolving-spinning process with ionic solutions.

### Example 1

The effect of the prior art acid hydrolysis and the effect of the combined enzyme treatment and the acid removal of the metal, respectively, to the properties of the chemical pulp was compared. The never-dried bleached softwood sulphate pulp was used as the pulp.

Metal contents and molar mass distributions of such obtained pulps were combined at the same viscosity level of 400 ml/g.

The dry matter content of the pulp used as a raw material was 40 weight-%.

As an comparative example a pulp sample (45 kg dry matter) was treated with sulphuric acid in the amount of 15 g/l in a consistency of 10 % at 90°C for 60 min. Hereafter, the acid treated pulp was washed with water.

In another experiment a pulp sample of 45 kg (dry matter) was treated first with endoglucanase dose of 0.7 mg protein/ g of pulp in a consistency of 20 % at pH value 5 and at temperature of 50 °C. The pulp was diluted to 5 % with hot water and cooked for 10 minutes, after which the pulp was filtered and washed with water. The washed pulp was maintained at pH value 2.5-3 for 60 minutes, after which a water wash was performed until the pH was raised to a value of 5-6. The pulps were determined for their metal content, viscosity (ISO 5351:2004) and molecular weight distribution by gel permeation chromatography (Size Exclusion Chromatography).

The results are presented in tables 1-2

**Table 1. Metal contents of the pulps**

| **Mass** | **Ca mg/kg** | **Co mg/kg** | **Cu mg/kg** | **Fe mg/kg** | **Mg mg/kg** | **Mn mg/kg** | **Si mg/kg** |
|---|---|---|---|---|---|---|---|
| Starting material | 51.6 | <0.5 | 0.17 | 19.3 | 173 | 0.7 | 156 |
| Comparison | 73.2 | < 0.5 | < 0.5 | 17.6 | 58.8 | 0.6 | 91.3 |
| Acid and enzyme treated pulp | 7.1 | < 0.5 | < 0.5 | 6.6 | 23.7 | < 0.3 | 98.2 |

**Table 2. Molecular weight distributions of the pulps**

| **Mass** | **Viscosity ml/g** | **Mn Daltons** | **Mw Daltons** | **Mz Daltons** | **Polydispersity µV*sec** |
|---|---|---|---|---|---|
| Starting material | 850 | 85 601 | 1 081 340 | 4 005 609 | 12.6 |
| Comparison | 450 | 41 900 | 408 050 | 1 537 303 | 9.7 |
| Acid and enzyme treated pulp | 450 | 44 950 | 422 250 | 1 610 251 | 9.4 |

### Example 2

The solubility and spinning of the processed pulps prepared in Example 1 was evaluated using 1-butyl-3-methyl-imidazolium-acetate (BMIMAc) as a solvent. The mass was dissolved in cellulose content of 13 % and fibers of 1.7 dtex was spun from the spinning solution.

The results have been presented in table 3.

**Table 3. Properties and spinning of the spinning solution.**

| **Mass** | **Solids content, %** | **Zero shear viscosity, Pas (80 °C)** | **Soluble** | **Spinning** |
|---|---|---|---|---|
| Comparison | 13 | 7633 | yes | unstable |
| E-A pulp | 13 | 4903 | yes | stable |

As the results show, by combining endoglucanase enzyme treatment and treatment to be performed under mildly acidic conditions, from a bleached sulphate pulp, such sulphate pulp suitable for paper manufacture, is obtained a pulp which is suitable for preparing a fiber spinning solution through IL-dissolving process.

### Citation List

### Patent Literature

EP 2 116 557 A1
EP 2 452 015
US 2009/0165969 A1

### Non-Patent Literature

Michud, A., Hummel, M., Sixta, H. 2015., Polymer (2015) 75: 1-9.
Pere J, Siika-Aho M, Buchert J, Viikari L., Tappi J 1995;78:71-8.
Grönqvist, S. et al., Cellulose 22(6) 2015: 3981-3990.
Ma, Y., et al., Green Chemistry (2016) 18(3): 858-866.

The project leading to this application has received funding from the Bio Based Industries Joint Undertaking under the European Union's Horizon 2020 research and innovation programme under grant agreement No 745766.

## Claims

1. A method of producing pulp suitable for dissolution of cellulose and optionally hemicellulose from never-dried, high viscosity paper pulp containing metal ions,
**characterised by** the combination that
- at a consistency of at least 10%, the pulp is brought into contact with an enzyme preparation in a water suspension to decrease the viscosity of the pulp,
- the pH of thus obtained pulp is brought to value of 2-3 to separate the metal ions from the pulp, after which
- the pH of the pulp is raised above 4 by water washing and
- the consistency of the washed pulp is raised to 30 to 50%,
and the obtained pulp is brought in a dissolution process of cellulose and hemicellulose.

2. The method according to claim 1, **characterised in that** the pulp is brought into contact with the enzyme preparation containing endoglucanase activity in order to lower the viscosity of the pulp.

3. The method according to claim 1 or 2, **characterised in that** the pulp is brought into contact with the enzyme preparation containing endoglucanase activity at pH value of higher than 4, especially higher than 5.

4. The method according to any of the preceding claims, **characterised in that** the pulp is brought into contact with the enzyme preparation containing endoglucanase activity for 0.1-10 h and at 10-75 °C, especially at 20-60 °C.

5. The method according to any of the preceding claims, **characterised in that** the viscosity and the DP and possibly the molar weight distribution of the pulp is modified with the enzyme treatment.

6. The method according to any of the preceding claims, **characterised in that** the pulp is brought into contact with the enzyme preparation at a consistency of 15-30 %.

7. The method according to any of the preceding claims, **characterised in that** the viscosity of the pulp is reduced by 5-75 %, especially 15-70 %, most suitably 30-60 %.

8. The method according to any of the preceding claims, **characterised in that** the consistency of the modified pulp obtained from the enzyme treatment is brought to a value of 1-2 weight-%, especially 5-15 weight-%.

9. The method according to any of the preceding claims, **characterised in that** the pH value of the modified pulp obtained from the enzyme treatment is brought to a value of 2-3 most suitably by adding acid, such as mineral acid, especially, in the form of and aqueous solution, to the stock of the pulp.

10. The method according to any of the preceding claims, **characterised in that** the metal content, especially earth alkali metal and transition metal content, of the modified pulp obtained from the enzyme treatment is brought into a value below than 100 ppm, especially below 50 ppm, from the weight of the material, by acid treatment.

11. The method according to any of the preceding claims, **characterised in that** after the removal of the metal ions the pulp is mechanically washed with water or aqueous solution, for example in washing device.

12. The method according to claim 11, **characterised in that** water is removed from the pulp obtained from the washing, after which the consistency of the pulp is raised to 30-49 weight-%, preferably 35-45 weight-%.

13. The method according to claim 12, **characterised in that** the obtained pulp is brought in the dissolution process of cellulose and hemicellulose, wherein the cellulose and the hemicellulose are dissolved straight in the solvent by using solvent, such as ionic liquid.

14. A method for producing a fiber spinning solution from cellulose and hemicellulose, according to which method
- as a raw material of cellulose and hemicellulose a use is made among others of chemical pulp suitable for paper manufacture, which chemical pulp comprises at least some metal ions originating from the pulp raw material, and
- the cellulose and the hemicellulose are dissolved in such liquid, in which cellulose and hemicellulose are soluble, and from which the dissolved cellulose and hemicellulose can be precipitated during the spinning in order to produce cellulosic structures,
**characterised in that**
- at a consistency of at least 10%, the pulp is brought into contact with an enzyme preparation, especially an enzyme preparation containing endoglucanase as a main activity, in order to reduce the viscosity of the pulp,
- the pH of the pulp is bought to a value of 3 or lower to separate the metal ions from the pulp, after which
- the pH of the pulp in raised to above 4 by water washing,
- the consistency of the washed pulp is raised to 30 to 50 %, after which
- the moist modified pulp is dissolved in a liquid phase by using solvent, such as ionic liquid, in order to form a spinning solution.

15. The method according to claim 14, **characterised in that** the molecular weight distribution of the pulp is modified with the enzyme treatment such that at least 90 weight-%, most suitably at least 95 weight-%, particularly at least 99.5 weight-%, of the pulp is dissolved in the solvent.

16. The method according to claim 14 or 15, **characterised in that** the metal content of the pulp obtained from the enzyme treatment is reduced to a value of below 0.0001 weight-% by bringing the pH of the pulp to a value of 2-3.

## Patentansprüche

1. Verfahren zum Erzeugen von Zellstoff, der zum Auflösen von Cellulose und optional Hemicellulose, aus nie getrocknetem, hochviskosem Papierzellstoff, der Metallionen enthält, geeignet ist, **gekennzeichnet durch** die Kombination, dass
- bei einer Konsistenz von mindestens 10 % der Zellstoff mit einem Enzympräparat in einer Wassersuspension in Kontakt gebracht wird, um die Viskosität des Zellstoffs zu verringern,
- der pH-Wert des derart erhaltenen Zellstoffs auf einen Wert von 2-3 gebracht wird, um die Metallionen von dem Zellstoff zu trennen, wonach
- der pH-Wert des Zellstoffs durch Waschen mit Wasser auf über 4 erhöht wird, und
- die Konsistenz des gewaschenen Zellstoffs auf 30 bis 50 % erhöht wird, und der erhaltene Zellstoff in einen Auflösungsprozess von Cellulose und Hemicellulose eingebracht wird.

2. Verfahren nach Anspruch 1, **dadurch gekennzeichnet, dass** der Zellstoff mit dem Enzympräparat, das Endoglucanaseaktivität enthält, in Kontakt gebracht wird, um die Viskosität des Zellstoffs zu senken.

3. Verfahren nach Anspruch 1 oder 2, **dadurch gekennzeichnet, dass** der Zellstoff bei einem pH-Wert von über 4, insbesondere über 5, mit dem Enzympräparat, das Endoglucanaseaktivität enthält, in Kontakt gebracht wird.

4. Verfahren nach einem der vorstehenden Ansprüche, **dadurch gekennzeichnet, dass** der Zellstoff für 0,1-10 h und bei 10-75 °C, insbesondere bei 20-60 °C, mit dem Enzympräparat, das Endoglucanaseaktivität enthält, in Kontakt gebracht wird.

5. Verfahren nach einem der vorstehenden Ansprüche, **dadurch gekennzeichnet, dass** die Viskosität und der DP sowie möglicherweise die Molgewichtsverteilung des Zellstoffs durch die Enzymbehandlung modifiziert werden.

6. Verfahren nach einem der vorstehenden Ansprüche, **dadurch gekennzeichnet, dass** der Zellstoff mit dem Enzympräparat bei einer Konsistenz von 15-30 % in Kontakt gebracht wird.

7. Verfahren nach einem der vorstehenden Ansprüche, **dadurch gekennzeichnet, dass** die Viskosität des Zellstoffs um 5-75 %, insbesondere 15-70 %, am besten 30-60 % reduziert wird.

8. Verfahren nach einem der vorstehenden Ansprüche, **dadurch gekennzeichnet, dass** die Konsistenz des modifizierten Zellstoffs, der durch die Enzymbehandlung erhalten wird, auf einen Wert von 1-2 Gew.-%, insbesondere 5-15 Gew.-% gebracht wird.

9. Verfahren nach einem der vorstehenden Ansprüche, **dadurch gekennzeichnet, dass** der pH-Wert des aus der Enzymbehandlung erhaltenen modifizierten Zellstoffs am besten durch Zugabe einer Säure, beispielsweise Mineralsäure, insbesondere in Form einer wässrigen Lösung, zu dem Zellstoffbestand auf einen Wert von 2-3 gebracht wird.

10. Verfahren nach einem der vorstehenden Ansprüche, **dadurch gekennzeichnet, dass** der Metallgehalt, insbesondere Erdalkalimetall- und Übergangsmetallgehalt, des aus der Enzymbehandlung erhaltenen modifizierten Zellstoffs durch Säurebehandlung auf einen Wert unter 100 ppm, insbesondere unter 50 ppm, bezogen auf das Gewicht des Materials, gebracht wird.

11. Verfahren nach einem der vorstehenden Ansprüche, **dadurch gekennzeichnet, dass** der Zellstoff nach dem Entfernen der Metallionen mechanisch mit Wasser oder einer wässrigen Lösung gewaschen wird, beispielsweise in einer Waschvorrichtung.

12. Verfahren nach Anspruch 11, **dadurch gekennzeichnet, dass** dem aus dem Waschen erhaltenen Zellstoff Wasser entzogen wird, wonach die Konsistenz des Zellstoffs auf 30-49 Gew.-%, bevorzugt 35-45 Gew.-% erhöht wird.

13. Verfahren nach Anspruch 12, **dadurch gekennzeichnet, dass** der erhaltene Zellstoff in den Lösungsprozess von Cellulose und Hemicellulose eingebracht wird, wobei die Cellulose und die Hemicellulose unter Verwendung eines Lösungsmittels, wie beispielsweise einer ionischen Flüssigkeit, direkt in dem Lösungsmittel gelöst werden.

14. Erzeugungsverfahren für eine Faserspinnlösung aus Cellulose und Hemicellulose, wobei gemäß dem Verfahren
- als ein Rohstoff aus Cellulose und Hemicellulose unter anderem eine Verwendung von chemischem Zellstoff, der für die Papierherstellung geeignet ist, erfolgt, wobei der chemische Zellstoff mindestens einige Metallionen enthält, die aus dem Zellstoffrohstoff stammen, und
- die Cellulose und die Hemicellulose in einer Flüssigkeit gelöst werden, in der Cellulose und Hemicellulose löslich sind, und aus der die gelöste Cellulose und Hemicellulose während des Spinnens ausgefällt werden können, um cellulosische Strukturen zu erzeugen,
**dadurch gekennzeichnet, dass**
- bei einer Konsistenz von mindestens 10 %, der Zellstoff mit einem Enzympräparat, insbesondere einem Enzympräparat, das Endoglucanase als eine Hauptaktivität enthält, in Kontakt gebracht wird, um die Viskosität des Zellstoffs zu reduzieren,
- der pH-Wert des Zellstoffs auf einen Wert von 3 oder weniger gebracht wird, um die Metallionen von dem Zellstoff zu trennen, wonach
- der pH-Wert des Zellstoffs durch Waschen mit Wasser auf über 4 erhöht wird,
- die Konsistenz des gewaschenen Zellstoffs auf 30 bis 50 % erhöht wird, wonach
- der feuchte modifizierte Zellstoff unter Verwendung eines Lösungsmittels, beispielsweise einer ionischen Flüssigkeit, in einer flüssigen Phase gelöst wird, um eine Spinnlösung zu bilden.

15. Verfahren nach Anspruch 14, **dadurch gekennzeichnet, dass** die Molekulargewichtsverteilung des Zellstoffs durch die Enzymbehandlung derart modifiziert wird, dass mindestens 90 Gew.-%, am besten mindestens 95 Gew.-%, insbesondere mindestens 99,5 Gew.-% des Zellstoffs in dem Lösungsmittel gelöst wird.

16. Verfahren nach Anspruch 14 oder 15, **dadurch gekennzeichnet, dass** der Metallgehalt des aus der Enzymbehandlung erhaltenen Zellstoffs durch Einstellen des pH-Werts des Zellstoffs auf einen Wert von 2-3 auf einen Wert von unter 0,0001 Gewichtsprozent reduziert wird.

## Revendications

1. Procédé de production d'une pâte adaptée pour la dissolution de cellulose et facultativement d'hémicellulose à partir de pâte à papier de viscosité élevée, jamais séchée contenant des ions métalliques, **caractérisé par** la combinaison selon laquelle
- à une consistance d'au moins 10 %, la pâte est mise en contact avec une préparation enzymatique en suspension dans l'eau pour diminuer la viscosité de la pâte,
- le pH de la pâte ainsi obtenue est amené à une valeur de 2-3 pour séparer les ions métalliques de la pâte, après quoi
- le pH de la pâte est élevé au-dessus de 4 par lavage à l'eau et
- la consistance de la pâte lavée est augmentée à 30 à 50 %, et la pâte obtenue est amenée dans un processus de dissolution de cellulose et d'hémicellulose.

2. Procédé selon la revendication 1, **caractérisé en ce que** la pâte est mise en contact avec la préparation enzymatique contenant une activité endoglucanase afin de diminuer la viscosité de la pâte.

3. Procédé selon la revendication 1 ou 2, **caractérisé en ce que** la pâte est mise en contact avec la préparation enzymatique contenant une activité endoglucanase à une valeur de pH supérieure à 4, en particulier supérieure à 5.

4. Procédé selon l'une quelconque des revendications précédentes, **caractérisé en ce que** la pâte est mise en contact avec la préparation enzymatique contenant une activité endoglucanase pendant 0,1-10 h et à 10-75 °C, en particulier à 20-60 °C.

5. Procédé selon l'une quelconque des revendications précédentes, **caractérisé en ce que** la viscosité et le DP et éventuellement la répartition du poids molaire de la pâte sont modifiés par le traitement enzymatique.

6. Procédé selon l'une quelconque des revendications précédentes, **caractérisé en ce que** la pâte est mise en contact avec la préparation enzymatique à une consistance de 15-30 %.

7. Procédé selon l'une quelconque des revendications précédentes, **caractérisé en ce que** la viscosité de la pâte est réduite de 5-75 %, en particulier de 15-70 %, de manière la plus appropriée de 30-60 %.

8. Procédé selon l'une quelconque des revendications précédentes, **caractérisé en ce que** la consistance de la pâte modifiée obtenue à partir du traitement enzymatique est amenée à une valeur de 1-2 % en poids, en particulier de 5-15 % en poids.

9. Procédé selon l'une quelconque des revendications précédentes, **caractérisé en ce que** la valeur de pH de la pâte modifiée obtenue à partir du traitement enzymatique est amenée à une valeur de 2-3, de manière la plus appropriée en ajoutant de l'acide, tel que de l'acide minéral, en particulier sous la forme d'une solution aqueuse, au stock de pâte.

10. Procédé selon l'une quelconque des revendications précédentes, **caractérisé en ce que** la teneur en métal, en particulier la teneur en métal alcalino-terreux et en métal de transition, de la pâte modifiée obtenue à partir du traitement enzymatique est amenée à une valeur inférieure à 100 ppm, en particulier inférieure à 50 ppm, par rapport au poids du matériau, par traitement acide.

11. Procédé selon l'une quelconque des revendications précédentes, **caractérisé en ce qu'**après l'élimination des ions métalliques, la pâte est lavée mécaniquement avec de l'eau ou une solution aqueuse, par exemple dans un dispositif de lavage.

12. Procédé selon la revendication 11, **caractérisé en ce que** de l'eau est éliminée de la pâte obtenue à partir du lavage, après quoi la consistance de la pâte est augmentée à 30-49 % en poids, de préférence 35-45 % en poids.

13. Procédé selon la revendication 12, **caractérisé en ce que** la pâte obtenue est amenée dans le processus de dissolution de cellulose et d'hémicellulose, dans lequel la cellulose et l'hémicellulose sont dissoutes directement dans le solvant en utilisant du solvant, tel que du liquide ionique.

14. Procédé de production d'une solution de filage de fibres à partir de cellulose et d'hémicellulose, selon lequel procédé
- en tant que matière première de cellulose et d'hémicellulose, une pâte chimique adaptée à la fabrication de papier est notamment utilisée, laquelle pâte chimique comprend au moins certains ions métalliques provenant de la matière première de pâte, et
- la cellulose et l'hémicellulose sont dissoutes dans un tel liquide, dans lequel de la cellulose et de l'hémicellulose sont solubles, et à partir duquel la cellulose et l'hémicellulose dissoutes peuvent être précipitées pendant le filage afin de produire des structures cellulosiques,
**caractérisé en ce que**
- à une consistance d'au moins 10 %, la pâte est mise en contact avec une préparation enzymatique, en particulier une préparation enzymatique contenant de l'endoglucanase en tant qu'activité principale, afin de réduire la viscosité de la pâte,
- le pH de la pâte est amené à une valeur inférieure ou égale à de 3 pour séparer les ions métalliques de la pâte, après quoi
- le pH de la pâte est élevé au-dessus de 4 par lavage à l'eau,
- la consistance de la pâte lavée est augmentée à 30 à 50 %, après quoi
- la pâte modifiée humide est dissoute dans une phase liquide en utilisant du solvant, tel que du liquide ionique, afin de former une solution de filage.

15. Procédé selon la revendication 14, **caractérisé en ce que** la répartition du poids moléculaire de la pâte est modifiée par le traitement enzymatique de sorte qu'au moins 90 % en poids, de manière la plus appropriée au moins 95 % en poids, en particulier au moins 99,5 % en poids, de la pâte est dissoute dans le solvant.

16. Procédé selon la revendication 14 ou 15, **caractérisé en ce que** la teneur en métal de la pâte obtenue à partir du traitement enzymatique est réduite à une valeur inférieure à 0,0001 % en poids en amenant le pH de la pâte à une valeur de 2-3.
